# EUROPEAN PATENT SPECIFICATION

(11) **EP 0 946 385 B1**
(45) Date of publication and mention of the grant of the patent: **07.08.2002**
(21) Application number: 97950510.4
(22) Date of filing: 19.12.1997
(51) Int. Cl.: B62D 31/02, B62D 29/00, B62D 21/08

(54) **A BUS HAVING AN INTEGRAL BODY**
SELBSTTRAGENDER KASTENAUFBAU FÜR OMNIBUS
AUTOBUS AVEC UN CHASSIS INTEGRAL

(30) Priority: 30.12.1996 NL 1004900
(43) Date of publication of application: 06.10.1999
(73) Proprietor: Autobusfabriek Bova B.V., 5550 AA Valkenswaard (NL)
(72) Inventor: DE ROOIJ, Isaac, Cornelis, NL-5551 TL Valkenswaard (NL)
(74) Representative: Louet Feisser, Arnold
(86) International application number: NL9700715
(87) International publication number: WO9829290

(56) References cited:
- CH-A- 240 334
- DE-A- 3 613 607
- FR-A- 829 250
- FR-A- 1 202 866
- GB-A- 910 251

## Description

The invention relates to a bus having an integral body (chassisless construction) comprising wall and/or floor parts which are so stiff that the body derives its stiffness from said parts. Such stiff and also strong wall parts are known per se, they may for example consist of a sandwich construction, whereby the wall is built up of several layers of material, whereby the outer layer may for example consist of plastic material or a metal.
Such a bus having an integral body comprising wall and/or floor parts which are so stiff that the body derives its stiffness from said parts is known from FR-A-829 250.
By forming the bus body of wall and floor parts which possess a high degree of stiffness and which are capable of withstanding a relatively large force, an integral body is obtained which consists nearly entirely of parts which are functionally required, such as wall and floor parts of the bus. In addition, the body may be of relatively light construction, because the weight of the wall and floor parts is low, in spite of their great stiffness and strenght.
When forming such an integral body the various wall and floor parts must be joined together, whereby it is important that they are correctly positioned relative to each other. It is possible thereby to use a number of assembly frames, to which various wall and/or floor parts are secured temporarily, so that they are correctly positioned when being joined together. After the respective parts have been joined toghether, the assembly frame can be removed, because its serves no further purpose, so that the assembly frame can be used again for manufacturing another bus. When, for whatever reason, a wall of floor part must be replaced, an assembly frame may be used again.
An object of the invention is to provide a bus with an integral body, whose parts have been joined together in an efficient manner.
In order to accomplish that objective the body comprises one or more assembly frames, by which the various component parts of the body are positioned when being assembled, whereby an assembly frame remains present in the body after the body has been formed.
Since the assembly frame or frames remain(s) present in the body, a more efficient construction of the assembly frame can be used, as the wall and floor parts can be fixed to said assembly frame all around. In addition, if a wall or floor part is to be replaced, the same assembly frame, which is still present, can be used.
The assembly frame, which remains present in the bus body after the assembly of said body, may be of relatively light construction, because it does nog have to be capable of withstanding large forces. Since such an assembly frame is relatively low-weight, there is no objection against the frame remaining present in the body.
The integral body of such a bus is connected to the wheel suspension by means of fastening elements near the front side and near the rear side of the bus. It is important thereby that the relatively large forces which are to be transmitted between the wheel suspension and the fastening elements can be taken up at the right places on the wall and floor parts.
According to another aspect of the invention an assembly frame is provided with fastening elements for connecting the body to the wheel suspension of the bus, which assembly frame is provided with connecting elements between each fastening element and a place located near said fastening element, where said connecting element is connected to a part of the body where the body can take up the supporting forces.

Although the assembly frame does not have a function as regards the stiffness and the strength of the body, the assembly frame is locally constructed in such a manner that parts of the assembly frame function as connecting elements capable of transmitting larger forces. Said connecting elements extend between on the one hand the places where the body is supported and on the other hand places where the wall and floor parts of the body are capable of taking up a relatively large force. By using these connecting elements, which form part of the assembly frame, an optimum support of the body an be effected, without the wall and floor parts of the body requiring special provisions at the location of said support. Preferably the connecting elements are connected to the side wall of the body, near the bottom edge of said side wall, ,where large forces can be transmitted.
In one preferred embodiment the wheel suspension is housed in a chassis from which the rear wheels or the front wheels are suspended, which chassis is connected tot the fastening elements. The bus body may thereby be connected by means of the fastening elements to a chassis near the front side of the bus as well as to a chassis near the rear side of the bus, whereby the assembly frame on which the fastening elements are present extends over substantially the entire lenght of the bus.
As already said before, the assembly frame may be of relatively light construction, whereby said assembly frame is preferably assembled from relatively light sections, whereby said connecting elements comprise sections of heavier construction, thus making it possible to transmit the forces involved in supporting the body.
According to another aspect of the invention a fastening element may be connected to the body be means of connecting elements in several places of the body, which may be conducive to achieving a proper distribution of forces over the body. The assembly frame, which remains present in the bus body after said body has been formed, and of which only the connecting elements have a function in the bus, may extend substantially in an area of the bus located at a lower level than the floor of the passenger compartment of the bus, whereby nearly all parts of the body can be positioned by the assembly frame upon being assembled.
According to another aspect of the invention the assembly frame may be attached by means of vibration-isolating fastening elements to a unit on which the drving motor is mounted and from which the rear wheels of the bus are suspended, or to a unit from which the front wheels of the bus are suspended. This makes it possible to increase the comfort of the passengers present in the bus, since vibrations and sound from the driving motor and wheel suspension and from the wheels running on the road surface are only transmitted to the body to a limited extent.
The invention furthermore relates to a method of manufacturing a bus having an integral body comprising stiff wall and floor parts, which give the bus its stiffness, wherein said wall and floor parts are secured to an assembly frame in order to be positioned relative to each other before being joined together so as to form the body, wherein the assembly frame remains present in the body after said body has been formed, and wherein said assembly frame is provided with connecting elements, which are connected on the one hand to a wall part and on the other hand to fastening element, by means of which the assembly frame is secured to the wheel suspension or to a chassis from which the wheels of the bus are suspended.
The invention furthermore relates to a method of supporting an integral body of a bus according to claim 9.
Further aspects of the invention, which may be used seperately but also in combination with each other, are disclosed in the description of the figures or defined in the claims.
For a better understanding of the invention one embodiment of an assembly frame for a bus will be described hereafter, as well as the manner in which various parts of the body of the bus are assembled, using such an assembly frame.
Figure 1 is a plan view of an assembly frame;
Figure 2 is a side view of the assembly frame of Figure 1;
Figure 3 is a perspective view of said assembly frame; and
Figures 4 - 6 show parts of the body of a bus, which parts are positioned by an assembly frame.
The figures are merely global and schematic representations, wherein like parts are numbered alike.

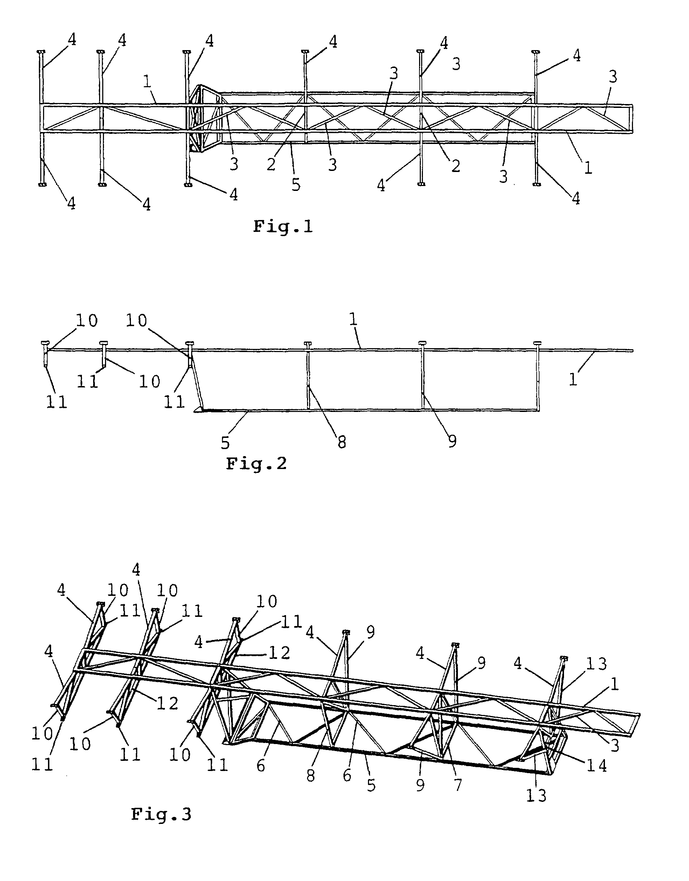

Figures 1 - 3 show an assembly frame which may be used in manufacturing a bus, which assembly frame is of light construction, so that it may remain present in the bus body after said bus body has been formed. The assembly frame is built up of light, tubular sections, and it comprises a rectangular frame 1, whose elongated shape substantially corresponds with the circumference of the aisle in the bus, Rectangular frame 1 comprises a number of cross beams 2 and obliquely extending beams 3, which ensure that frame 1 will not be deformed. Beams 4 extend laterally on either side of frame 1, which beams slope upwards to the place where the bottom edge of a side wall of the bus is to be positioned.
Present under frame 1 is a second, substantially rectangular frame 5, which likewise comprises obliquely extending beams 6 and cross beams 7. Second frame 5 is positioned at a level near the underside of the bus. Upper frame 1 and lower frame 5 are connected together by upwardly extending beams 8, whilst lower frame 5 is also connected to the ends of laterally extending beams 4 in a number of places, by means of upwardly sloping beams 9.
The assembly frame is of relatively light construction, it is not intended to contribute towards the stiffness of the integral body of the bus, but only to position the various parts of the frame during the assembly thereof.
The assembly frame comprises a number of connecting elements of heavier construction in the form of heavier sections, which are capable of transmitting a larger force. Said connecting elements are sections provided between on the one hand places where the body is supported by the wheel suspension or by a chassis, and on the other hand places where the side wall of the bus is capable of taking up larger forces.
Said connecting elements are an integral part of the assembly frame. The assembly frame shown in Figures 1 - 3 is positioned in the bus in such a manner that the substantially vertically oriented connecting elements 10 extend between the bottom edge of the side wall of the bus and the places 11 where the bus body is supported by a chassis from which the rear wheels of the bus are suspended. In this embodiment the connecting elements 10 are not only of heavier construction, but said connecting elements are connected together in pairs by means of a strengthened frame 12, which is capable of transmitting larger forces, so that the supporting forces of the body in one point of support 11 can be transmitted to two places located at the bottom edge of the side wall of the bus, more specifically on either side of the bus.
Present at the front side of the assembly frame are connecting elements 13, which extend between on the one hand the fastening elements 14, where the body is supported by a chassis from which the front wheels of the bus are suspended, and on the other hand a place near the bottom edge of the side wall of the bus. Also these connecting elements 13 are comprised of heavier sections than the other parts of the assembly frame, so that relatively large forces can be transmitted.
Although Figures 1 - 3 show an example of an assembly frame which extend over practically the entire length of the bus body, it is also possible according to the invention to use a smaller assembly frame only comprising frame 12 (Figure 3), for example. In that case such an assembly frame will embody both functions: on the one hand the positioning of parts during assembly and on the other hand the providing of strengthened connecting elements. Apart from said connecting elements, the assembly frame is of extremely light construction.

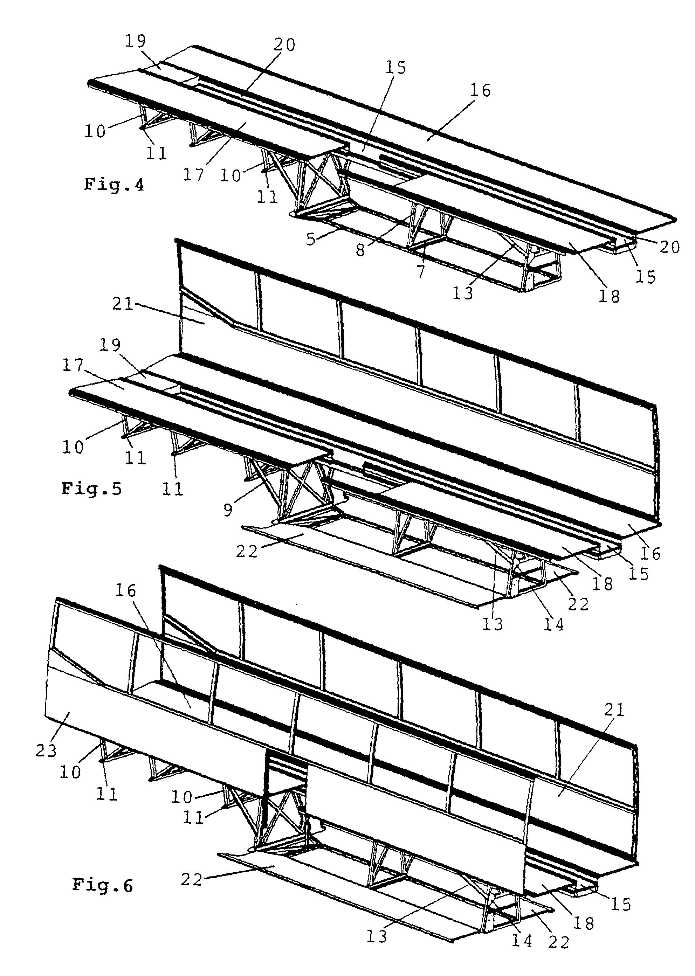

Figures 4 - 6 show an assembly frame of slightly different construction than in the preceding figures, wherein parts of the bus body are secured to the assembly frame in order to be positioned relative to each other and subsequently be joined together in correct relative positions.
Figure 4 shows floor parts of the passenger compartment of the bus. An elongated rectangular floor part 15 makes up the floor of the aisle in the bus, whilst rectangular plates 16, 17, 18 make up the floor under the seats of the bus. Floor part 16 extends the entire length of the bus, whilst part of the floor between floor parts 17 and 18 is left out to provide room for steps leading to the side door of the bus and/or for placing a toilet room. The floor may also consist of fewer floor parts than the illustrated number, and it is also possible within the scope of the invention to use one floor part, which takes up the entire floor of the passenger compartment.
Near the rear side of the bus an elevated part 19 of the central aisle is provided, and furthermore elongated vertical plates 20 are present, which join together on the one hand floor parts 16, 17, 18 and on the other hand floor part 15. By firmly joining together said parts, for example by means of a glued connection, a stiff construction is obtained, which contributes towards the stiffness of the integral body.
Figure 5 shows how left-hand side wall 21 is positioned and secured to the side edge of floor part 16. Furthermore, wall parts 22 are secured to lower frame 5 so as to form the floor of a luggage compartment, which present within the bus body, under the passenger compartment.
Figure 6 shows the stage of assembly of the body in which both side walls 21, 23 have been provided, with a recess for the side door of the bus being shown in the right-hand side wall 23.
Once the roof of the bus connects the upper edges of the two side walls 21, 23, and also the other parts of the body have been provided and joined together, a stiff, integral body has been formed, in which a number of connecting elements 10, 13 are present between places 11, 14 where the body is supported and places where large forces can be taken up by the body, in particular the bottom edge of side walls 21, 23 of the bus.
The illustrated embodiment is only an example of a possible manner of implementing the invention, other embodiments are also possible within the scope of the invention.

## Claims

1. A bus having an integral body comprising wall and/or floor parts (15, 16, 17, 18, 21, 22, 23) which are so stiff that the body derives its stiffness from said parts, **characterized in that** said body comprises one or more assembly frames (1, 5), by which the various components parts of the body are positioned when being assembled, whereby an assembly frame remains present in the body after the body has been formed.

2. A bus according to claim 1, **characterized in that** an assembly frame (1, 5) is provided with fastening elements (11, 14) for connecting the body to the wheel suspension of the bus, which assembly frame is provided with connecting elements (10, 13) between each fastening element (11, 14) and a place located near said fastening element, where said connecting element (10, 13) is connected to a part of the body where the body can take up the supporting forces.

3. A bus according to claim 2, **characterized in that** the wheel suspension is housed in a chassis from which the rear wheels or the front wheels are suspended, which chassis is connected to the fastening elements (11, 14).

4. A bus according to any one of the claims 2 or 3, **characterized in that** said connecting elements (10, 13) comprise sections which are of heavier construction than the sections (2, 3, 4, 6, 7, 8, 9) of the other part of the assembly frame.

5. A bus according to any one of the claims 2 - 4, **characterized in that** a fastening element (11) may be connected to the body by means of connecting elements (12) in several places of the body.

6. A bus according to any one of the preceding claims, **characterized in that** the assembly frame (1, 5) extends substantially in an area of the bus located at a lower level than the floor (16, 17, 18) of the passenger compartment of the bus.

7. A bus according to any one of the claims 2 - 6, **characterized in that** fastening element (11) comprises vibration-isolating fastening elements, by means of which it is connected to a unit on which the driving motor is mounted and from which the rear wheels of the bus are suspended, or to a unit from which the front wheels of the bus are suspended.

8. A method of manufacturing a bus having an integral body comprising stiff wall and floor parts (15, 16, 17, 18, 21, 22, 23), which give the bus its stiffness, **characterized in that** said wall and floor parts are secured to an assembly frame (1, 5) in order to be positioned relative to each other before being joined together so as to form the body, wherein the assembly frame remains present in the body after said body has been formed.

9. A method of supporting an integral body of a bus, **characterized in that** said body is supported by connecting elements (10, 13), which are on the one hand connected to wall parts (21, 23) of the body and which are on the other hand connected to fastening elements (11, 14) secured to the wheel suspension or to a chassis from which the wheels of the bus are suspended, which connecting elements form part of an assembly frame which remains present in the body.

## Patentansprüche

1. Omnibus mit einer selbsttragenden Karosserie mit Wand und/oder Bodenteilen (15, 16, 17, 18, 21, 22, 23), die so steif sind, daß die Karosserie ihre Steifheit von diesen Teilen erhält, **dadurch gekennzeichnet, daß** die Karosserie einen oder mehrere Montagerahmen (1, 5) aufweist, durch den die verschiedenen Bestandteile der Karosserie während der Montage positioniert sind, wobei ein Montagerahmen nach der Bildung der Karosserie in derselben verbleibt.

2. Omnibus nach Anspruch 1, **dadurch gekennzeichnet, daß** ein Montagerahmen (1, 5) mit Befestigungselementen (11, 14) versehen ist zum Verbinden der Karosserie mit der Radaufhängung des Omnibusses, wobei der Montagerahmen mit Verbindungselementen (10, 13) versehen ist zwischen jedem Befestigungselement (11, 14) und einer Stelle nahe dem Befestigungselement, wo das Verbindungselement (10, 13) mit einem Teil der Karosserie verbunden ist, wo die Karosserie die Abstützkräfte aufnehmen kann.

3. Omnibus nach Anspruch 2, **dadurch gekennzeichnet, daß** die Radaufhängung in einem Fahrgestell untergebracht ist, von dem die Hinterräder oder die Vorderräder aufgehängt sind, wobei das Fahrgestell mit den Befestigungselementen (11, 14) verbunden ist.

4. Omnibus nach einem der Ansprüche 2 oder 3, **dadurch gekennzeichnet, daß** die Verbindungselemente (10,13) Abschnitte aufweisen, die von stärkerer Konstruktion sind als die Abschnitte (2, 3, 4, 6, 7, 8, 9) des übrigen Teils des Montagerahmens.

5. Omnibus nach einem der Ansprüche 2 bis 4, **dadurch gekennzeichnet, daß** ein Befestigungselement (11) mit der Karosserie mittels Verbindungselementen (12) an mehreren Stellen der Karosserie verbunden sein kann.

6. Omnibus nach einem der vorangehenden Ansprüche, **dadurch gekennzeichnet, daß** der Montagerahmen (1, 5) sich im wesentichen in einem Bereich des Omnibusses erstreckt, der auf tieferem Niveau als der Boden (16, 17, 18) der Fahrgastzelle des Busses liegt.

7. Omnibus nach einem der Ansprüche 2 bis 6, **dadurch gekennzeichnet, daß** ein Befestigungselement (11) schwingungsisolierende Befestigungselemente umfaßt, durch die es mit einer Einheit verbunden ist an der der Antriebsmotor gelagert ist, und von der die Hinterräder des Busses aufgehängt sind, oder mit einer Einheit, von der die Vorderräder des Busses aufgehängt sind.

8. Verfahren zum Herstellen eines Busses mit einer selbsttragenden Karosserie mit steifen Wand- und Bodenteilen (15, 16, 17, 18, 21, 22, 23), die dem Bus seine Steifigkeit geben, **dadurch gekennzeichnet, daß** die Wand- und Bodenteile an einem Montagerahmen (1, 5) befestigt werden, um relativ zueinander positioniert zu werden, bevor sie zur Bildung der Karosserie miteinander verbunden werden, wobei der Montagerahmen nach der Bildung der Karosserie in derselben verbleibt.

9. Verfahren zum Abstützen einer selbsttragenden Karosserie eines Omnibusses, **dadurch gekennzeichnet, daß** die Karosserie durch Verbindungselemente (10, 13) abgestützt wird, die einerseits mit Wandteilen (21, 23) der Karosserie verbunden sind und andererseits mit Befestigungselementen (11, 14) verbunden sind, die an der Radaufhängung oder einem Fahrgestell, an dem die Räder des Busses aufgehängt sind, befestigt ist, wobei die Verbindungselemente Teil eines Montagerahmens bilden, der in der Karosserie verbleibt.

## Revendications

1. Autobus ayant une carrosserie intégrale comprenant des parties de paroi et/ou de plancher (15, 16, 17, 18, 21, 22, 23) ayant une rigidité telle que la carrosserie tire sa rigidité des dites parties, **caractérisé en ce que** ladite carrosserie comprend un ou plusieurs bâtis d'assemblage (1, 5), au moyen desquels les différentes composantes de la carrosserie sont positionnées lors de l'assemblage, de sorte qu' un bâti d'assemblage reste présent dans la carrosserie après avoir que la carrosserie a été constituée.

2. Autobus selon la revendication 1, **caractérisé en ce qu'**un bâti d'assemblage (1, 5) est muni d'éléments de fixation (11, 14) destinés à relier la carrosserie à la suspension des roues de l'autobus, bâti d'assemblage qui est muni d'éléments de liaison (10, 13) disposés entre chaque élément de fixation (11, 14) et un emplacement situé à proximité dudit élément de fixation, dans lequel ledit élément de liaison (10, 13) est relié à une partie de la carrosserie où la carrosserie peut supporter les forces de support mises en jeu.

3. Autobus selon la revendication 2, **caractérisé en ce que** la suspension des roues est logée dans un châssis auquel sont suspendues les roues arrière ou les roues avant, châssis qui est relié aux éléments de fixation (11, 14).

4. Autobus selon l'une quelconque des revendications 2 ou 3, **caractérisé en ce que** lesdits éléments de liaison (10, 13) comprennent des sections de construction plus lourde que les sections (2, 3, 4, 6, 7, 8, 9) de l'autre partie du bâti d'assemblage.

5. Autobus selon l'une quelconque des revendications 2 à 4, **caractérisé en ce qu'**un élément de fixation (11) peut être relié à la carrosserie au moyen d'éléments de liaison (12) en plusieurs emplacements de la carrosserie.

6. Autobus selon l'une quelconque des revendications précédentes, **caractérisé en ce que** le bâti d'assemblage (1, 5) s'étend sensiblement dans une partie de l'autobus située à un niveau inférieur au plancher (16, 17, 18) du compartiment passagers de l'autobus.

7. Autobus selon l'une quelconque des revendications 2 à 6, **caractérisé en ce que** l'élément de fixation (11) comprend des éléments de fixation isolants des de vibrations, au moyen desquels il est relié à un organe sur lequel est monté le moteur d'entraînement et auquel sont suspendues les roues arrière de l'autobus, ou à un organe auquel sont suspendues les roues avant de l'autobus

8. Procédé de fabrication d'un autobus ayant une carrosserie intégrale comprenant des parties de paroi et de plancher rigides (15, 16, 17, 18, 21, 22, 23) qui donnent sa rigidité à l'autobus, **caractérisé en ce que** les dites parties de paroi et de plancher sont fixées à un bâti d'assemblage (1, 5) pour être positionnées les unes par rapport aux autres avant d'être reliées les unes aux autres afin de constituer la carrosserie, dans lequel le bâti d'assemblage reste présent dans la carrosserie après que ladite carrosserie a été constituée.

9. Procédé pour supporter une carrosserie intégrale d'un autobus, **caractérisé en ce que** ladite carrosserie est supportée par des éléments de liaison (10, 13) qui sont d'une part reliés aux parties de paroi (21, 23) de la carrosserie et d'autre part aux éléments de fixation (11, 14) qui sont fixés à la suspension des roues ou à un châssis auquel sont suspendues les roues de l'autobus, éléments de liaison qui font partie d'un bâti d'assemblage qui reste présent dans la carrosserie.
